# EUROPÄISCHE PATENTSCHRIFT

(11) **EP 1 184 667 B1**
(45) Veröffentlichungstag und Bekanntmachung des Hinweises auf die Patenterteilung: **14.04.2010**
(21) Anmeldenummer: 01120216.5
(22) Anmeldetag: 23.08.2001
(51) Int. Cl.: G01P 1/12, G07C 7/00, G07C 5/12, G01D 15/32

(54) **Fahrtschreiber mit zwei in einer Ebene angeordneten Lese-/Schreibaggregaten für Datenkarten**
Tachograph with two read/write unit for data cards disposed in one plane
Tachygraphe avec deux unités de lecture/écriture pour cartes de données agencées dans un plan

(30) Priorität: 01.09.2000 DE 20015100 U
(43) Veröffentlichungstag der Anmeldung: 06.03.2002
(73) Patentinhaber: Continental Automotive GmbH, 30165 Hannover (DE)
(72) Erfinder: Burkart, Harald, 78054 Villingen-Schwenningen (DE); Klostermeier, Dieter, 78050 Villingen-Schwenningen (DE)

(56) Entgegenhaltungen:
- EP-A- 0 438 914
- EP-A- 0 794 503
- EP-A- 0 899 676
- EP-A- 0 918 222
- EP-A- 0 940 765
- DE-A- 10 141 177
- DE-U- 29 916 314

## Beschreibung

Die Erfindung betrifft einen Fahrtschreiber mit zwei im wesentlichen in einer Ebene angeordneten Lese-/Schreibaggregaten für Datenkarten, wobei die Fahrer und Beifahrer eines Kraftfahrzeuges zugeordneten Datenkarten aus einer Lese-/Schreibposition selbsttätig in eine Entnahmeposition transportiert werden.

Die Druckschrift EP 0 438 914 A beschreibt eine IC-Kartenausstoßvorrichtung zum selektiven auswerfen einer der beiden IC-Karten. Die Vorrichtung besteht aus einem Antriebsmittel, das zwischen den IC-Karten angeordnet ist und beweglich in einer ersten Richtung zum Auswerfen einer der IC-Karten und in einer zweiten Richtung entgegengesetzt der ersten Richtung zum Auswerfen der anderen der IC-Karten.

DE 299 16 314 U offenbart ein Schubgetriebe eines Fahrtschreibers mit einem ersten, mit einem Motor in getrieblicher Verbindung stehenden Schubglied und einem zweiten Schubglied, an welchem eine variable Last angreift und welches mit dem ersten Schubglied in keilgetrieblicher Verbindung steht.

Bei Fahrtschreibern mit einem flachen, quaderförmigen Einbaugehäuse steht in Richtung der Hochachse des Gehäuses, insbesondere wenn das Gerät einen Drucker beinhaltet, der von der Frontseite her mit als Bandwickel vorliegendem Aufzeichnungsmaterial befüllt werden muss, für das Anordnen von zwei den Datenkarten von Fahrer und Beifahrer eines Fahrzeuges zugeordneten Lese-/Schreibaggregaten nur ein extrem flacher Bauraum zu Verfügung, welcher beispielsweise zwischen dem Boden des Gehäuses und einer Leiterplatte, welche die elektronischen Bauelemente des Fahrtschreibers und die diesen funktionsbedingt zugeordneten Leitungen trägt, gegeben ist. Das heißt, dass die notwendigerweise in diesem Bauraum vorzusehenden Lese-/Schreibaggregate der in Bezug auf das Gehäuse im wesentlichen formatfüllenden Leiterplatte zugeordnet werden müssen, zumal die mit den Datenkarten zusammenwirkenden Kontaktsätze zweckmäßigerweise auf der Leiterplatte befestigt und kontaktiert sind. Das heißt ferner, dass die den Datenkarten zugeordneten Führungsmittel unmittelbar auf der im allgemeinen mit Leiterbahnen und elektronischen Bauteilen dicht bestückten Leiterplatte zu befestigen sind. Außerdem sind Antriebsmittel vorzusehen, die bewirken, dass in der Lese-/Schreibposition befindliche Datenkarten in die Entnahmeposition verbracht und in diesem Zusammenhang die Verriegelungsmittel von gegebenenfalls vorgesehenen Datenkartenträgern gelöst oder Schließelemente, die den Eingabeschlitzen der Datenkarten zugeordnet sind, betätigt werden. Wegen der notwendigen unmittelbaren Zuordnung der Antriebsmittel zu den Führungsmitteln und der gegebenen geringen Bauhöhe, sind verständlicherweise auch die Antriebsmittel unmittelbar an der Leiterplatte zu befestigen. Auf diese Weise entsteht zusätzlich zum Bauhöhenengpaß ein Problem durch den Platzbedarf, der für das Anbringen der Führungs- und Antriebsmittel auf der Leiterplatte vorzusehenden Befestigungselemente.

Ziel der vorgesehenen Erfindung ist es daher, die den Lese-/Schreibaggregaten zuzuordnenden Antriebsmittel derart auszubilden, dass bei seriengerechter Fertigung und Montage eine optimale Raumnutzung und ein möglichst geringer Flächenbedarf hinsichtlich der Leiterplatte besteht.

Die Lösung dieser Aufgabe sieht vor, dass für beide, einer Leiterplatte des Fahrtschreibers unmittelbar zugeordnete Lese-/Schreibaggregate ein in seiner Drehrichtung umsteuerbarer Stellmotor vorgesehen ist, dass der Stellmotor getrieblich mit einem den Lese-/Schreibaggregaten zugeordneten Steuerschieber in Verbindung steht und dass an dem Steuerschieber in bezug auf dessen Bewegungsrichtungen beidseitig Mittel vorgesehen sind, welche ein Verbringen der Datenkarten aus der Lese-/Schreibposition in die Entnahmeposition bewirken.

Ein bevorzugtes Ausführungsbeispiel ist **dadurch gekennzeichnet, dass** an dem Steuerschieber mit beiden Lese-/Schreibaggregaten in Wirkverbindung bringbare keilgetriebliche Mittel ausgebildet sind.

Baulich vorteilhaft ist ferner eine Ausbildung derart, dass ein den Steuerschieber und die Steuerschieber und Stellmotor funktionell verbindenden Getriebeelemente lagernder Träger vorgesehen ist, wobei eine räumlich optimierte Lösung sich dadurch ergibt, dass der Stellmotor auf der dem Träger entgegengesetzten Seite der Leiterplatte angeordnet ist und das auf der Welle des Stellmotors befindliche Antriebsritzel mit einem auf dem Träger gelagerten Getriebeelement in Eingriff steht.

Ein weiteres Ausführungsbeispiel kennzeichnet sich dadurch aus, dass der Stellmotor auf dem Träger befestigt ist und dass in der Leiterplatte eine Freisparung derart vorgesehen ist, dass der Stellmotor, wenn die Getriebebaugruppe mit der Leiterplatte verbunden ist, die Leiterplatte berührungslos durchgreift.

Hervorzuheben ist außerdem, dass dem Steuerschieber zwei Lichtschranken zugeordnet sind und dass an dem Steuerschieber mit den Lichtschranken zusammenwirkende Schaltfahnen angeformt sind, wobei die Schaltfahnen an dem Steuerschieber in einer Linie ausgebildet sind, derart, dass eine von drei Schaltfahnen länger ist als der Abstand der Lichtschranken.

Vorteilhafte Ausgestaltungen der Erfindung gehen aus den übrigen, hier nicht zitierten abhängigen Ansprüchen und aus der Beschreibung des Ausführungsbeispiels hervor.

Die gefundene Lösung wird der gestellten Aufgabe in vollem Umfang gerecht. Von Vorteil ist insbesondere, dass nur ein Stellmotor und ein diesem nachgeordnetes Getriebe zum Antrieb eines Steuerschiebers vorgesehen sind, wobei der Steuerschieber aus einer zentralen Ruheposition heraus wahlweise auf das eine oder andere Lese-/Schreibaggregat im Sinne eines Verbringens einer Datenkarte in die Entnahmeposition einwirkt, wenn die jeweilige für die Freigabe einer Datenkarte vorgesehene Taste betätigt wird. Dadurch wird im Gegensatz zu autarken Lese-/Schreibaggregaten eine erhebliche Fertigungsvereinfachung und Kostenminimierung erzielt. Dabei ist die Erfindung unabhängig davon anwendbar, ob in den Lese-/Schreibaggregaten ein selbsttätiger Transport der eingegebenen Datenkarten in die Lese-/Schreibposition erfolgte oder ob die Datenkarten von Hand gegebenenfalls unter Verwendung eines Trägers, beispielsweise einer Schublade, in die die Datenkarten eingelegt werden, in die Lese-/Schreibposition vorgesteckt und in dieser Position in geeigneter Weise verriegelt werden.

Ferner ist hervorzuheben, dass die erfindungsgemäße Lösung den gegebenen Bauraum in optimaler Weise nutzt, insbesondere auch dadurch, dass der Bauhöhe erfordernde Stellmotor auf der den Lese-/Schreibaggregaten entgegengesetzten Seite der Leiterplatte des Fahrtschreibers angeordnet ist und die Welle des Stellmotors durch die Leiterplatte hindurch auf die Getriebeseite durchgreift.

Besonders erwähnenswert ist in diesem Zusammenhang die aus den Getriebeelementen, dem Steuerschieber und dem Träger gebildete, vormontierbare Getriebebaugruppe, die sich mit lediglich drei dem Festschrauben dienenden Ansatzbolzen auf der Leiterplatte abstützt. Dabei ist trotzt der wegen des Kraftbedarfs des Steuerschiebers erforderlichen, relativ hohen Übersetzung die Anzahl der Getriebeelemente sowie der Raumbedarf der gesamten Getriebebaugruppe aufgrund der Wahl der in Eingriff stehenden Getriebeelemente und deren kompakter Anordnung sowie durch die vorgesehene integrale Führung des Steuerschiebers in besonderer Weise minimiert. Andererseits ist aber auch der Fertigungs- und Montageaufwand, indem die Getriebebaugruppe ausschließlich unter Verwendung von Fügeverbindungen und Rastmittel zusammengebaut ist, gering.

Gleiches, das heißt, minimaler Raumbedarf und geringer Fertigungs- und Montageaufwand gilt insbesondere auch für die dem Steuerschieber zugeordneten Abfragemittel, die mit lediglich zwei Lichtschranken und drei in einer Linie am Steuerschieber ausgebildeten Schaltfahnen drei Positionen und die jeweilige Bewegungsrichtung erkennbar machen.

Bei dem zusätzlich genannten Ausführungsbeispiel ergibt sich, da der Stellmotor nicht unmittelbar auf der Leiterplatte befestigt ist, abgesehen von einer Bauhöhenreduzierung, der Vorteil einer Verringerung der Gefahr einer Verstärkung der Geräusche des Stellmotors durch Schwingungen der Leiterplatte. Außerdem wird die Montage vereinfacht, indem eine Vormontage von Getriebebaugruppe und Stellmotor erfolgen kann und dabei Toleranzadditionen, die durch die Montage des Stellmotors auf der Leiterplatte entstehen können, vermieden werden.

Im folgenden sei die Erfindung anhand von Zeichnungen des bevorzugten Ausführungsbeispiels erläutert. Es zeigen:
Figur 1 eine Frontansicht eines gattungsgemäßen Fahrtschreibers,
Figur 2 eine Untersicht der Leiterplatte des Fahrtschreibers gemäß Figur 1 mit zwei an einer Leiterplatte befestigten Lese-/Schreibaggregaten und einer diesen zugeordneten Getriebebaugruppe,
Figur 3 eine aufgelöste, perspektivische Darstellung der Getriebebaugruppe,
Figur 4 eine perspektivische Darstellung der Getriebebaugruppe in Zuordnung zur Leiterplatte sowie eines auf der Leiterplatte befestigten Stellmotors.

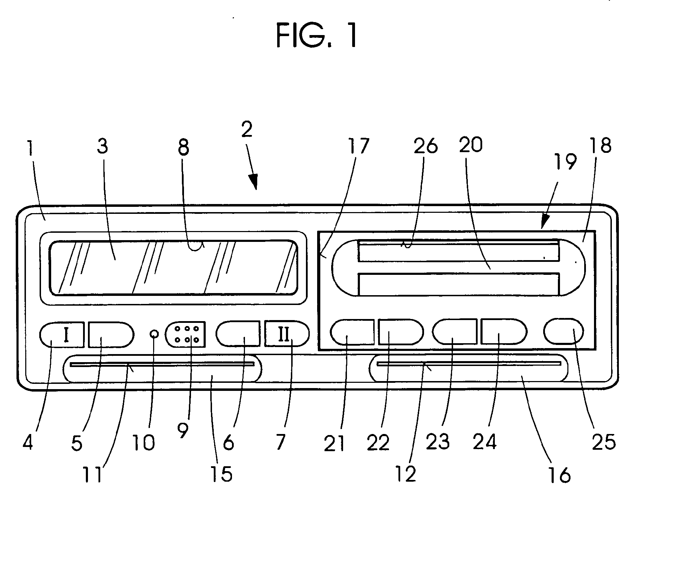

In Figur 1 ist mit 1 eine Blende bzw. eine Frontwand bezeichnet, die ein Gehäuse 2 eines Fahrtschreibers rechteckförmigen Querschnitts frontseitig abschließt. In der Frontwand 1 sind eine Anzeigevorrichtung 3 gehaltert sowie Tasten 4, 5 und 6, 7 geführt. Dabei dienen die Tasten 4 (I) und 7 (II) dem Anmelden von Fahrer und Beifahrer, die Tasten 5 und 6 dem Freigeben der jeweiligen Datenkarten. Mit 8 ist ein der Anzeigevorrichtung 3 zugeordneter Fensterausschnitt bezeichnet. Eine gefedert gelagerte Abdeckung 9 deckt eine Steckerfassung ab; 10 stellt eine Warnlampe dar. Schlitze 11 und 12 dienen dem Eingeben von den Fahrern zugeordneten Datenkarten in Lese-/Schreibaggregate 13 und 14 des Fahrtschreibers, wobei die Schlitze 11, 12 im Grunde von jeweils trichterförmigen Senkungen 15 und 16 ausgebildet sind. Ferner ist in der Frontwand 1 eine Aussparung 17 vorgesehen, welche von einem Frontelement 18 einer Druckvorrichtung 19 abgedeckt ist, und zwar derart, dass sich das Frontelement 18 gestalterisch, insbesondere flächenbündig, in die Frontfläche der Frontwand 1 des Fahrtschreibers einfügt.

Der Vollständigkeit halber sei erwähnt, dass die Druckvorrichtung 19 einen Schlitten umfasst, mittels dessen sie aus dem Fahrtschreiber herausbewegbar ist. Dem Schlitten kann ein bistabiles Rastgetriebe zugeordnet sein, welches, im Falle dass Aufzeichnungsmaterial nachgefüllt werden soll, durch Betätigen des Frontelements 18, das somit als Taste dient, ent- und verriegelbar ist. Außerdem sind in dem Frontelement 18, das mit einer Griffleiste 20 versehen ist, mehrere Tasten 21, 22 und 23, 24 sowie 25 gelagert. Diese dienen zusammen mit den Tasten 4 und 7 dem Anwählen der wichtigsten Arbeitszeitdaten von Fahrer und Beifahrer, dem Vorwärts- und Rückwärtsblättern in den jeweiligen Datensätzen einer angewählten Datenart und der Druckauslösung. Mit 26 ist eine Auslassöffnung für das bedruckte Aufzeichnungsmaterial bezeichnet.

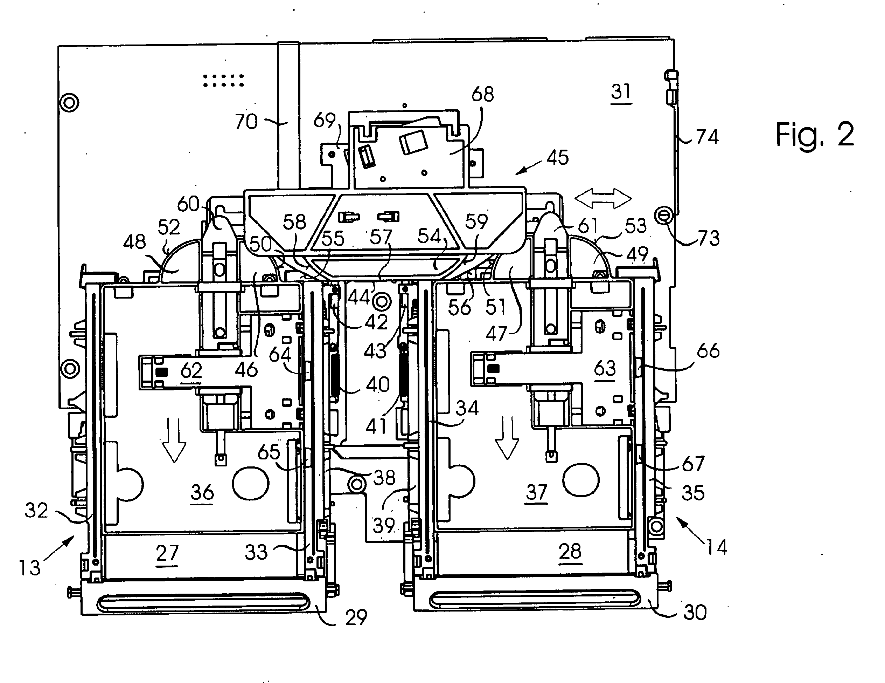

In der Figur 1 ist der betreffende Fahrtschreiber in einem Zustand dargestellt, in welchem die Schlitze 11, 12 zugänglich und somit Datenkarten einführbar sind. Die Untersicht, Figur 2, zeigt demgegenüber eine Situation, in der in beiden Lese-/Schreibaggregaten 13, 14 Datenkarten 27 und 28 aufgenommen und den Lese-/Schreibaggregaten 13, 14 zugeordnete, drehbar gelagerte Schließelemente 29 und 30 derart verschwenkt sind, dass die Schlitze 11, 12 unzugänglich sind. Wie aus der Figur 2 außerdem ersichtlich ist, sind die Lese-/Schreibaggregate 13, 14 unmittelbar einer, und zwar einer im wesentlichen den gesamten Gehäusequerschnitt quer zur Hochachse einnehmenden Leiterplatte 31 zugeordnet. Der Einfachheit halber ist auf die Darstellung von auf der Leiterplatte befindlichen elektronischen Bauelementen und Leiterbahnen verzichtet. Mit 32 und 33 sowie mit 34 und 35 sind Führungswangen der Lese-/Schreibaggregate 13, 14 bezeichnet, zwischen denen die Datenkarten 27, 28 aufnehmende Schlitten 36 und 37 verschiebbar gelagert sind. Die Führungswangen 32, 33 und 34, 35, die von der Gegenseite der Leiterplatte 31 mit dieser verschraubt sind, sind außerdem derart ausgebildet, dass sie Schubstangen 38 und 39 von die Schließelemente 29 bzw. 30 betätigenden Schubkurbelgetrieben als Lagerung dienen. Die Schubstangen 38, 39 stehen unter der Wirkung von Zugfedern 40 und 41 und tragen schwenkbar gelagerte Riegel 42 und 43, an welchen eine Zugfeder 44 angreift. Die Riegel 42, 43 wirken, wenn eine Datenkarte 27, 28 in die Entnahmeposition verbracht werden soll, mit einem Bauelement einer vormontierbaren, an der Leiterplatte 31 befestigten Getriebebaugruppe 45 zusammen, und zwar im Sinne eines Entriegelns des jeweiligen Schubkurbelgetriebes und Verschwenkens des betreffenden Schließelementes 29, 30 in die Offenstellung unter der Wirkung einer der Zugfedern 40 bzw. 41. Umgekehrt erfolgt beim Eingeben einer Datenkarte 27, 28 in das jeweilige Lese-/Schreibaggregat 13, 14 ein Verriegeln des betreffenden Schließelementes 29, 30 in der Geschlossenstellung. Das heißt, beim Eingeben einer Datenkarte 27, 28 wird die dem jeweiligen Lese-/Schreibaggregat 13, 14 zugeordnete Schubstange 38, 39 bis zum Wirksamwerden des betreffendes Riegels 42, 43 verschoben.

Die Figur 2 zeigt ferner, dass an den, um unverwechselbar montierbar zu sein, gleichgestalteten Schlitten 36, 37 Fortsätze 46, 47, 48 und 49 ausgebildet sind, welche von gekrümmten Flächen 50, 51, 52 und 53 begrenzt sind.

Letzteren sind an einem in der Getriebebaugruppe 45 verschiebbar gelagerten Steuerschieber 54 ebenfalls gekrümmt ausgebildete Keilflächen 55 und 56 zugeordnet. Ferner sind an einem an dem Steuerschieber 54 aufgesetzt ausgebildeten Rahmen 57 zwei weitere Keilflächen 58 und 59 angeformt, die jeweils beim Freigeben einer Datenkarte 27, 28 mit auf den Schlitten 36, 37 gelagerten Schiebern 60 und 61 keilgetrieblich in Wirkverbindung treten.

Der Vollständigkeit halber sei zum Verständnis der letztgenannten, jedoch nicht erfindungswesentlichen Funktion erwähnt, dass bei dem gewählten Ausführungsbeispiel die Datenkarten 27, 28 selbsttätig in die Lese-/Schreibposition transportiert werden. Das heißt, beim Einschieben einer Datenkarte 27, 28 auf einen Schlitten 36, 37 wird ein Kippsprungwerk betätigt, das bewirkt, dass ein auf dem Schlitten 36, 37 gelagertes Riegelelement 62 und 63 außer Eingriff geht mit in den Führungswangen 33, 35 vorgesehenen Aussparungen 64, 65 und 66, 67. Gleichzeitig wird die auf dem Schlitten 36, 37 befindliche Datenkarte 27, 28 durch seitliches Greifen gespannt und der jeweilige Schlitten 36, 37 unter der Wirkung einer Zugfeder in die in der Figur 2 dargestellte Lese-/Schreibposition transportiert. Eine nach dem Betätigen einer Taste 5 oder 6 erfolgende Schubbewegung des Steuerschiebers 54 bewirkt ein keilgetriebliches Zusammenwirken der Keilflächen 55 bzw. 56 mit den Flächen 50 bzw. 51 und ein Verschieben des jeweiligen Schlittens 36, 37 in die Eingabe-/Entnahmeposition, in der die Riegelelemente 62, 63 zunächst noch nicht in die Führungswangen 33, 35 eingreifen. Die Verriegelung der Schlitten 36, 37 erfolgt bei der weiteren Schubbewegung des Steuerschiebers 54 indem die Keilflächen 58, 59 mit den in geeigneter Weise ausgebildeten Schiebern 60 bzw. 61 in Wirkverbindung treten und mit deren Schubbewegung die jeweiligen Kippsprungwerke betätigt werden. Nachfolgend kehrt der Steuerschieber 54 in die in Figur 2 dargestellte zentrale Lage zurück. Im übrigen sei noch erwähnt, dass mit dem Vorsehen gekrümmter, keilgetrieblich zusammenwirkender Flächen, das heißt mit dem Vorsehen veränderlicher Keilwinkel zwischen den Schubgliedern bei nichtlinearem Lastanstieg, wie er im vorliegenden Falle gegeben ist, ein Drehmomnentausgleich für den treibenden Stellmotor geschaffen werden kann.

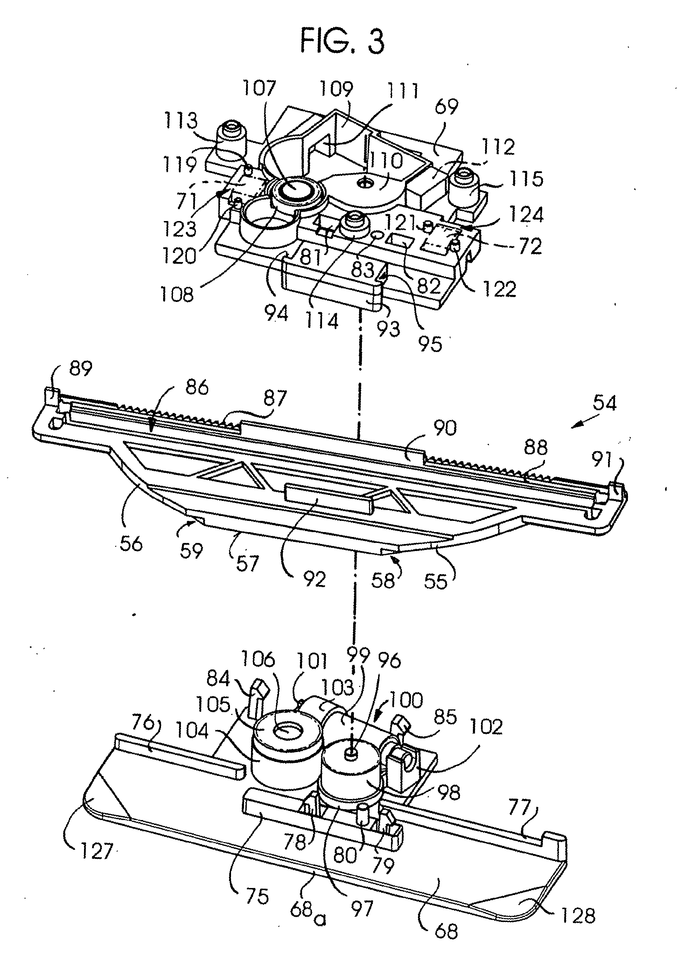

Aus der Figur 2 ist ferner noch die Unterseite einer tragenden Platine 68 sichtbar, die zusammen mit einer weiteren abdeckenden Platine 69 einen den Steuerschieber 54 lagernden Träger der Getriebebaugruppe 45 bildet. Ein mit 70 bezeichnetes Leitungsband ist für die elektrische Verbindung von zwei dem Steuerschieber 54 zugeordneten Lichtschranken 71 und 72 vorgesehen, die in Figur 3 strichpunktiert angedeutet sind. Von mehreren, der Befestigung der Leiterplatte 31 im Gehäuse 2 des Fahrtschreibers vorgesehenen Durchgangsbohrungen ist stellvertretend eine mit 73 bezeichnet. Eine mit 74 bezeichnete Kontur stellt Wandteile eines auf der Oberseite der Leiterplatte 31 befestigten, mehreren Steckern zugeordneten Steckersockels dar.

Die aufgelöste Darstellung der Getriebebaugruppe 45 gemäß Figur 3 zeigt als Montagefolge die wesentlichen Baueinheiten der Getriebebaugruppe 45, und zwar in einer der Darstellung gemäß Figur 2 entgegengesetzten perspektivischen Draufsicht. Aus ihr ist ersichtlich, dass an der tragenden Platine 68 eine dem Steuerschieber 54 zugeordnete Führungsleiste 75 sowie miteinander fluchtende Versteifungsschenkel 76 und 77 angeformt sind. Mit 78 und 79 sowie 80 sind einerseits Riegel andererseits ein Zentrierzapfen bezeichnet, denen in der abdeckenden Platine 69 gestufte Durchbrüche 81 und 82 sowie eine Durchgangsbohrung 83 zugeordnet sind. Dem Zusammenfügen der Platinen 68 und 69 dienen ferner zwei Rasthaken 84 und 85, die an der Außenseite der abdeckenden Platine 69 angreifen. Der Abstand zwischen den Platinen 68 und 69 und somit der Führungsspalt des Steuerschiebers 54 ergibt sich demnach durch die Höhe der Führungsleiste 75 und durch die Höhe von den Rasthaken 84, 85 zugeordneten, an der Platine 69 angeformten jedoch in Figur 3 nicht sichtbaren Abstandszapfen. Das heißt, die Stirnflächen von Führungsleiste 75 und Abstandszapfen dienen der gegenseitigen Auflage der Platinen 68 und 69 beim Einrasten der Riegel 78, 79 und der Rasthaken 84, 85.

Aus der Figur 3 ist ferner ersichtlich, dass der Steuerschieber 54 einen Schlitz 86 aufweist, welcher der Breite der Führungsliste 75 entspricht. Mit 87 ist eine an dem Steuerschieber 54 ausgebildete Verzahnung bezeichnet; eine durchgehende Rippe 88 dient der Versteifung. Außerdem sind an dem Steuerschieber 54 mit den Lichtschranken 71 und 72 zusammenwirkende Schaltfahnen 89, 90 und 91 angeformt. Eine Zunge 92 dient je nach Schubrichtung des Steuerschiebers 54 dem Entriegeln des einen oder anderen Riegels 42 bzw. 43 und somit dem Freigeben eines Schubkurbelgetriebes im Sinne des Öffnens des jeweiligen Schließelementes 29 bzw. 30. Die Zunge 92 bewegt sich, wenn die Platinen 68 und 69 zusammengefügt sind, innerhalb eines in der Figur 3 nicht sichtbaren Schlitzes, welcher in einem an der Platine 69 ausgebildeten Anbau 93 vorgesehen ist. Letzterer ist mit Hinterschnitten 94 und 95 versehen, die dem Verrasten der Riegel 42, 43 dienen. Mit dem in Form des Rahmens 57 ausgebildeten Aufbau des Steuerschiebers 54, an dem die Keilflächen 58, 59 angeformt sind, ergibt sich zwischen der tragenden Platine 68 und dem Steuerschieber 54, indem der Rahmen 57 die Platine 68 umgreift, eine weitere Verschachtelung und somit Bauraumnutzung. Zusätzlich wird mittels der der Stirnfläche 68a der Platine 68 gegenüberliegenden, nicht näher bezeichneten Außenfläche des Rahmens 57, insbesondere während des Betätigens der Schieber 60, 61, eine Stützfunktion ermöglicht und somit eine Verkleinerung des infolge des notwendigen Führungsspiels zwischen der Führungsleiste 75 und dem Schlitz 86 des Steuerschiebers 54 bestehenden Kippwinkels und letztlich eine Verbesserung der Schaltgenauigkeit erzielt.

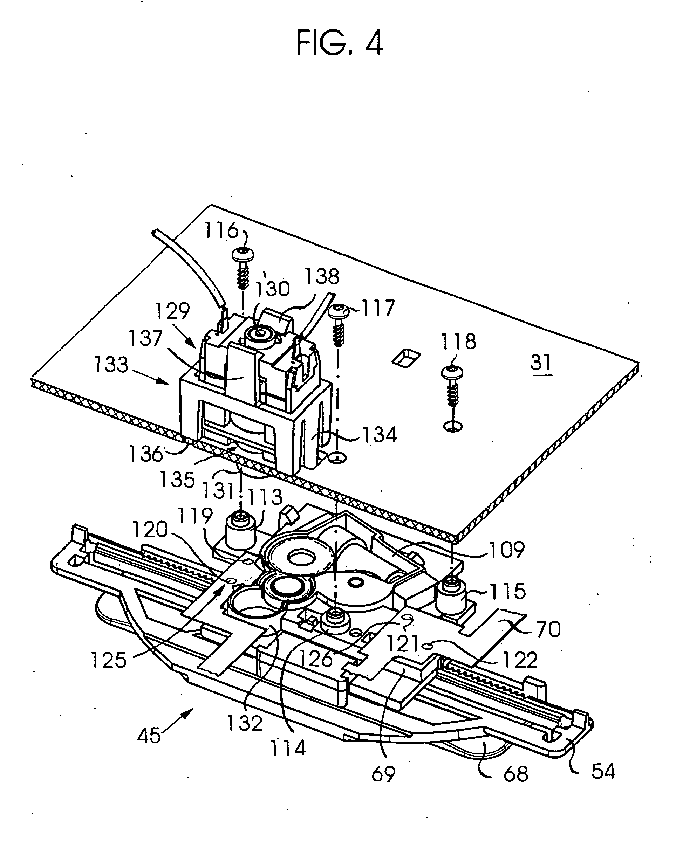

Der Vormontagezustand gemäß Figur 3 zeigt auf der tragenden Platine 68 angebrachte Getriebeelemente, und zwar ein auf einer Achse 96 gelagertes Stirnradpaar 97/98 dessen eines Stirnrad 97 nach der Montage des Steuerschiebers 54 mit der Verzahnung 87 in Eingriff steht und dessen anderes, schrägverzahnets Stirnrad 98 mit einer Schnecke 99 einer Schneckenwelle 100 kämmt. Gleichachsig mit der Schnecke 99 ist an der Schneckenwelle 100, die in einseitig offenen Lagerschalen 101 und 102 aufgenommen ist, ein Stirnrad 103 angeformt, welches in Eingriff steht mit einer Schnecke/Stirnrad-Paarung 104/105, die auf einer Achse, vorzugsweise einer mit einem der achsialen Sicherung dienenden, das heißt, mit einem Flansch versehenen Achse 106 gelagert ist. Nach dem Auflegen des Steuerschiebers 54 auf die tragende Platine 68, wobei wie bereits erwähnt, die Verzahnung 87 des Steuerschiebers 54 in Eingriff steht mit dem Stirnrad 97, wird zur Vervollständigung der Getriebebaugruppe 45 die abdeckende Platine 69 lediglich mit der tragenden Platine 68 verrastet. Dabei kommt ein auf der Platine 69 ebenfalls unter Verwendung einer axial sichernden, mit einem Flansch versehenen Achse 107 gelagertes Zwischenrad 108 in Eingriff mit dem Stirnrad 105. Mit 109 ist eine an der Platine 69 angeformte, die Getriebeelemente umgreifende Schutzwand bezeichnet, die nach dem Befestigen der Getriebebaugruppe 45 an der Leiterplatte 31 nur einen geringen Abstand zur Leiterplatte 31 aufweist und auf diese Weise bezüglich der Getriebeelemente als Verschmutzungsschutz dient. In die Schutzwand 109 integriert sind eine dem Stirnradpaar 97/98 als axiale Sicherung zugeordnete Brücke 110 sowie Kammern 111 und 112, die der radialen Sicherung der Schneckenwelle 100 dienen. An dieser Stelle sei erwähnt, dass es denkbar ist, das Stirnradpaar 97/98 und die Schnecke/Stirnrad-Paarung 104/105 als Wellen auszubilden und unmittelbar in den Platinen 68 und 69 zu lagern. Die Lese-/Schreibaggregate 13, 14 des gewählten Ausführungsbeispiels erfordern jedoch relativ hohe Schaltkräfte, so dass die vorgesehenen zusätzlichen Achsen 96 und 106 eine zwar aufwendigere aber verschleißsichere Lösung darstellen. Mit 113, 114 und 115 sind drei an der Platine 69 angeformte Ansatzbolzen bezeichnet, die für die Befestigung der fertig montierten Getriebebaugruppe 45 an der Leiterplatte 31 mittels in Figur 4 dargestellter Schrauben 116, 117 und 118, die zweckmäßigerweise zusammen mit in Figur 4 nicht dargestellten Unterlegscheiben verwendet werden, vorgesehen sind.

Zapfen 119, 120, 121 und 122, die den Fassungen 123 und 124 für die Lichtschranken 71, 72 zugeordnet sind, dienen dem Befestigen der Leitungsenden 125 und 126 des die Lichtschranken 71, 72 tragenden Leitungsbandes 70, beispielsweise durch Warmstauchen. Mit 127 und 128 sind an der Platine 68 angeformte Führungsflächen bezeichnet, die eine höhenmäßig enge und für die Funktion zwischen dem Steuerschieber 54 und den Schlitten 36, 37 zweckmäßige Zuordnung der Fortsätze 46, 47 zum Träger 68, 69 ermöglichen.

Die Figur 4 zeigt letztlich das besonders einfache Zusammenfügen der Getriebebaugruppe 45 mit dem Stellmotor 129, welcher auf der Leiterplatte 31 vormontiert ist. Dabei taucht das auf der Welle 130 des Stellmotors 129 befestigte Antriebsritzel 131 in die hülsenförmige Ausbuchtung 132 der Schutzwand 109 ein und kommt in Eingriff mit dem Zwischenrad 108. Der Befestigung des Stellmotors 129 auf der Leiterplatte 31 dient ein Halter 133, welcher seinerseits unter der Wirkung von die Leiterplatte 31 hintergreifenden Riegeln, von denen einer in Figur 4 sichtbar und mit 134 bezeichnet ist, an der Leiterplatte 31 befestigt ist. Dabei greift ein an dem Halter 133 ausgebildeter, mit einer Durchgangsöffnung für die Welle 130 des Stellmotors 129 versehener Zentrierzapfen 135 in die Leiterplatte 31 ein. Wenigstens ein zusätzlicher Zapfen 136 dient der Lagefixierung des Halters 133. Zwei mit 137 und 138 bezeichnete, am Halter 133 angeformte Rasthaken sind für das Festhalten des Stellmotors 129 innerhalb des Halters 133 vorgesehen.

## Patentansprüche

1. Fahrtschreiber mit zwei im wesentlichen in einer Ebene angeordneten Lese-/Schreibaggregaten für Datenkarten, wobei die Fahrer und Beifahrer eines Kraftfahrzeuges zugeordneten Datenkarten aus einer Lese-/Schreibposition selbsttätig in eine Entnahmeposition transportiert werden, **dadurch gekennzeichnet, dass** für beide, einer Leiterplatte (31) des Fahrtschreibers unmittelbar im Sinne einer Befestigung zugeordnete Lese-/ Schreibaggregate (13, 14) ein in seiner Drehrichtung umsteuerbarer Stellmotor (129) vorgesehen ist, dass der Stellmotor (129) getrieblich mit einem den Lese-/Schreibaggregaten (13, 14) zugeordneten Steuerschieber (54) in Verbindung steht, dass an dem Steuerschieber (54) in Bezug auf dessen Bewegungsrichtungen beidseitig Mittel vorgesehen sind, welche ein Verbringen der Datenkarten (27, 28) aus der Lese-/Schreibposition in die Entnahmeposition bewirken, dass ein den Steuerschieber (54) und die Steuerschieber (54) und Stellmotor (129) funktionell verbindenden Getriebeelemente (97, 98, 99, 103, 104, 105, 108) lagernder Träger vorgesehen ist.

2. Fahrtschreiber nach Anspruch 1, **dadurch gekennzeichnet, dass** an dem Steuerschieber (54) mit beiden Lese-/Schreibaggregaten (13, 14) in Wirkverbindung bringbare keilgetriebliche Mittel (55, 56, 58, 59) ausgebildet sind.

3. Fahrtschreiber nach Anspruch 1, **dadurch gekennzeichnet, dass** der Träger auf der Seite der Leiterplatte (31) befestigt ist, auf der sich die Lese-/ Schreibaggregate (13, 14) befinden.

4. Fahrtschreiber nach Anspruch 3, **dadurch gekennzeichnet, dass** der Stellmotor (129) auf der dem Träger entgegengesetzten Seite der Leiterplatte (31) angeordnet ist und das auf der Welle (130) des Stellmotors (129) befindliche Antriebsritzel (131) mit einem auf dem Träger gelagerten Getriebeelement (108) in Eingriff steht.

5. Fahrtschreiber nach Anspruch 3, **dadurch gekennzeichnet, dass** der Träger aus zwei miteinander verbindbaren Platinen (68, 69) aufgebaut ist, dass der Steuerschieber (54) zwischen den Platinen (68, 69) geführt ist und dass an einer Platine (69) der lagegenauen Befestigung des Trägers auf der Leiterplatte (31) dienende Ansatzbolzen (113, 114, 115) ausgebildet sind.

6. Fahrtschreiber nach Anspruch 5, **dadurch gekennzeichnet, dass** die zwischen einem auf der Welle (130) des Stellmotors (129) angeordneten Antriebsritzel (131) und dem Steuerschieber (54) vorgesehenen Getriebeelemente (97, 98, 99, 103, 104, 105, 108) derart ausgebildet sind, dass sie sich innerhalb eines, durch gedachte äußere Begrenzungsebenen der Platinen gebildeten flachen Bauraumes befinden.

7. Fahrtschreiber nach Anspruch 5, **dadurch gekennzeichnet, dass** die Getriebeelemente (97, 98, 99, 103, 104, 105, 108) im Wesentlichen auf einer Platine (68) gelagert sind und dass an der Platine (68) ein dem Steuerschieber (54) zugeordnetes, quer zu dessen Bewegungsrichtungen wirkendes Führungselement (75) ausgebildet ist.

8. Fahrtschreiber nach Anspruch 5, **dadurch gekennzeichnet, dass** die Platinen (68, 69) mittels Füge- und Rastverbindungselementen (78, 79, 80, 84, 85) miteinander verbindbar sind.

9. Fahrtschreiber nach Anspruch 3, **dadurch gekennzeichnet, dass** die Getriebeelemente (97, 98, 99, 103, 104, 105, 108) eine auf einer ersten Achse (106) gelagerte Schnecke/Stirnrad-Paarung (104/105), eine auf ein zweiten Achse (96) gelagertes Stirnradpaar (97/98) und eine mit einem Stirnrad (103) und einer Schnecke (99) versehene Schneckenwelle (100) umfassen, wobei das Stirnrad (103) der Schneckenwelle (100) mit der Schnecke (104) der Schnecke/Stirnrad- Paarung (104/105), die Schnecke (99) der Schneckenwelle (100) mit dem Stirnrad (98) des Stirnradpaares (97/98) in Eingriff stehen.

10. Fahrtschreiber nach Anspruch 9, **dadurch gekennzeichnet, dass** an dem Steuerschieber (54) eine Verzahnung (87) ausgebildet ist, mittels der der Steuerschieber (54) im auf dem Träger montierten Zustand mit dem Stirnrad (97) des Stirnradpaares (97/98) in Eingriff steht.

11. Fahrtschreiber nach Anspruch 1, **dadurch gekennzeichnet, dass** dem Steuerschieber (54) zwei Lichtschranken (71, 72) zugeordnet sind und dass an dem Steuerschieber (54) mit den Lichtschranken (71, 72) zusammenwirkende Schaltfahnen (89, 90, 91) angeformt sind.

12. Fahrtschreiber nach Anspruch 11, **dadurch gekennzeichnet, dass** die Schaltfahnen (89, 90, 91) an dem Steuerschieber (54) in einer Linie ausgebildet sind und dass eine von drei Schaltfahnen (90) unwesentlich kürzer ist als der Abstand der Lichtschranken (71, 72).

13. Fahrtschreiber nach Anspruch 3, **dadurch gekennzeichnet, dass** der Stellmotor (129) auf dem Träger befestigt ist und dass in der Leiterplatte (31) eine Freisparung derart vorgesehen ist, dass der Stellmotor (129), wenn die Getriebebaugruppe (45) mit der Leiterplatte (31) verbunden ist, die Leiterplatte (31) berührungslos durchgreift.

## Claims

1. Tachograph with two read/write units, arranged substantially in one plane, for data cards, wherein the data cards which are assigned to the driver and co-driver of a motor vehicle are transported automatically into a removal position from a read/write position, **characterized in that** an actuating motor (129) with a reversible direction of rotation is provided for both read/write units (13, 14) which are directly assigned to a printed circuit board (31) of the tachograph in terms of attachment, **in that** the actuating motor (129) has a geared connection to a control slide (54) which is assigned to the read/write units (13, 14), **in that** means which cause the data cards (27, 28) to be moved out of the read/write position into the removal position are provided on both sides of the control slide (54) with respect to the movement directions thereof, **in that** a carrier, on which the control slide (54) and gear mechanism elements (97, 98, 99, 103, 104, 105, 108) which functionally connect the control slides (54) and the actuating motor (129) are mounted, is provided.

2. Tachograph according to Claim 1, **characterized in that** wedge-mechanisms (55, 56, 58, 59) which can be operatively connected to the two read/write units (13, 14) are formed on the control slide (54).

3. Tachograph according to Claim 1, **characterized in that** the carrier is attached to the side of the printed circuit board (31) on which the read/write units (13, 14) are located.

4. Tachograph according to Claim 3, **characterized in that** the actuating motor (129) is arranged on the side of the printed circuit board (31) opposite the carrier, and the drive pinion (131) which is located on the shaft (130) of the actuating motor (131) is in engagement with a gear mechanism element (108) which is mounted on the carrier.

5. Tachograph according to Claim 3, **characterized in that** the carrier is constructed from two plates (68, 69) which can be connected to one another, **in that** the control slide (54) is guided between the plates (68, 69), and **in that** shoulder bolts (113, 114, 115), which serve to attach the carrier to the printed circuit board (31) in a precisely positioned fashion, are formed on a plate (69).

6. Tachograph according to Claim 5, **characterized in that** the gear mechanism elements (97, 98, 99, 103, 104, 105, 108) provided between a drive pinion (131), arranged on the shaft (130) of the actuating motor (129), and the control slide (54) are embodied in such a way that they are located within a flat installation space which is formed by virtual external boundary planes of the plates.

7. Tachograph according to Claim 5, **characterized in that** the gear mechanism elements (97, 98, 99, 103, 104, 105, 108) are mounted substantially on a plate (68), and **in that** a guide element (75), which is assigned to the control slide (54) and acts transversely with respect to the movement directions thereof, is formed on the plate (68).

8. Tachograph according to Claim 5, **characterized in that** the plates (68, 69) can be connected to one another by means of joining and latching connection elements (78, 79, 80, 84, 85).

9. Tachograph according to Claim 3, **characterized in that** the gear mechanism elements (97, 98, 99, 103, 104, 105, 108) comprise a worm/spur gear pairing (104/105) mounted on a first axle (106), a spur gear pair (97/98) mounted on a second axle (96), and a worm shaft (100) provided with a spur gear (103) and a worm (99), wherein the spur gear (103) of the worm shaft (100) is in engagement with the worm (104) of the worm/spur gear pairing (104/105), and the worm (99) of the worm shaft (100) is in engagement with the spur gear (98) of the spur gear pair (97/98).

10. Tachograph according to Claim 9, **characterized in that** a toothing (87), by means of which the control slide (54) is in engagement with the spur gear (97) of the spur gear pair (97/98) in the state in which it is mounted on the carrier, is formed on the control slide (54).

11. Tachograph according to Claim 1, **characterized in that** two photoelectric barriers (71, 72) are assigned to the control slide (54), and **in that** switching lugs (89, 90, 91), which interact with the photoelectric barriers (71, 72), are integrally formed on the control slide (54).

12. Tachograph according to Claim 11, **characterized in that** the switching lugs (89, 90, 91) are formed on the control slide (54) in a line, and **in that** one of three switching lugs (90) is shorter to an insignificant degree than the distance between the photoelectric barriers (71, 72).

13. Tachograph according to Claim 3, **characterized in that** the actuating motor (129) is attached to the carrier, and **in that** a cutout is provided in the printed circuit board (31) in such a way that the actuating motor (129) engages through the printed circuit board (31) in a contactless fashion when the gear mechanism assembly (45) is connected to the printed circuit board (31).

## Revendications

1. Tachygraphe comportant deux unités de lecture et écriture pour cartes à puce, où les dites unités sont disposées essentiellement dans un même plan, où les cartes à puce affectées au premier et au deuxième conducteur d'un véhicule automobile sont transportées automatiquement, à partir d'une position de lecture et écriture, dans une position d'extraction, **caractérisé par le fait que**, pour les deux unités de lecture et écriture (13, 14) correspondant, en ce qui concerne leur fixation, directement à une carte à circuits imprimés (31) du tachygraphe, il est prévu un moteur de commande (129) dont le sens de rotation peut être inversé, que le moteur de commande (129) est en prise d'entraînement avec un curseur de commande (54) correspondant aux unités de lecture et écriture (13, 14), qu'il est prévu, sur les deux côtés du curseur de commande (54) en ce qui concerne ses directions de déplacement, des moyens qui déterminent un déplacement des cartes à puce (27, 28) de la position de lecture et écriture dans la position d'extraction, qu'il est prévu un support sur lequel repose le curseur de commande (54) et les organes de transmission (97, 98, 99, 103, 104, 105, 108) reliant fonctionnellement le curseur de commande (54) et le moteur de commande (129).

2. Tachygraphe selon la revendication 1, **caractérisé par le fait que**, sur le curseur de commande (54), sont ménagés des moyens de transmission à clavette (55, 56, 58, 59) pouvant être mis en prise avec les deux unités de lecture et écriture (13, 14).

3. Tachygraphe selon la revendication 1, **caractérisé par le fait que** le support est fixé sur la face de la carte à circuits imprimés (31) sur laquelle se trouvent les unités de lecture et écriture (13, 14).

4. Tachygraphe selon la revendication 3, **caractérisé par le fait que** le moteur de commande (129) est placé sur la face de la carte à circuits imprimés (31) opposée au support et que le pignon d'entraînement (131) qui se trouve sur l'arbre (130) du moteur de commande (129) est en prise avec un organe de transmission (108) monté sur le support.

5. Tachygraphe selon la revendication 3, **caractérisé par le fait que** le support est constitué par deux platines (68, 69) reliées l'une à l'autre, que le curseur de commande (54) est guidé entre les platines (68, 69) et que, sur une platine (69), sont ménagés des boulons à épaulement (113, 114, 115) servant à la fixation dans une position précise du support sur la carte à circuits imprimés (31).

6. Tachygraphe selon la revendication 5, **caractérisé par le fait que** les organes de transmission (97, 98, 99, 103, 104, 105, 108), prévus entre un pignon d'entraînement (131) placé sur l'arbre (130) du moteur de commande (129) et le curseur de commande (54), sont conçus de manière telle qu'ils se trouvent à l'intérieur d'un espace plat formé par des plans extérieurs imaginaires limitant les platines.

7. Tachygraphe selon la revendication 5, **caractérisé par le fait que** les organes de transmission (97, 98, 99, 103, 104, 105, 108) sont montés essentiellement sur une platine (68) et que, sur la platine (68), est formé un organe de guidage (75) correspondant au curseur de commande (54) et agissant perpendiculairement à ses directions de déplacement.

8. Tachygraphe selon la revendication 5, **caractérisé par le fait que** les platines (68, 69) sont reliées l'une à l'autre au moyen de liens d'assemblage et de fixation (78, 79, 80, 84, 85).

9. Tachygraphe selon la revendication 3, **caractérisé par le fait que** les organes de transmission (97, 98, 99, 103, 104, 105, 108) comprennent un ensemble vis sans fin/roue dentée droite (104/105) monté sur un premier axe (106), un couple de roues dentées droites (97/98) monté sur un deuxième axe et un arbre de vis sans fin (100) doté d'une roue dentée droite (103) et d'une vis sans fin (99), la roue dentée droite (103) de l'arbre de vis sans fin (100) étant en prise avec la vis sans fin (104) de l'ensemble vis sans fin / roue dentée droite (104/105) et la vis sans fin (99) de l'arbre de vis sans fin (100) étant en prise avec la roue dentée droite (98) du couple de roues dentées droites (97/ 98).

10. Tachygraphe selon la revendication 9, **caractérisé par le fait qu'**un engrenage (87) est ménagé sur le curseur de commande (54) au moyen duquel le curseur de commande (54) est en prise, dans son état monté sur le support, avec la roue dentée droite (97) du couple de roues dentées droites (97/ 98).

11. Tachygraphe selon la revendication 1, **caractérisé par le fait que** deux barrières lumineuses (71, 72) sont affectées au curseur de commande (54) et que des palettes de commutation (89, 90, 91) intervenant sur les barrières lumineuses (71, 72) sont montées sur le curseur de commande (54).

12. Tachygraphe selon la revendication 11, **caractérisé par le fait que** les palettes de commutation (89, 90, 91) sont montées sur une ligne droite sur le curseur de commande (54) et que l'une (90) des trois barrières lumineuses est plus courte d'une manière insignifiante que l'écart séparant les barrières lumineuses (71, 72).

13. Tachygraphe selon la revendication 3, **caractérisé par le fait que** le moteur de commande (129) est fixé sur le support et qu'il est prévu, sur la carte à circuits imprimés (31), un évidement tel que le moteur de commande (129) traverse la carte à circuits imprimés (31) sans y avoir de contact lorsque le module de transmission (45) est lié à la carte à circuits imprimés (31).
